(19) Europäisches Patentamt
European Patent Office
Office européen des brevets

(11) EP 0 562 294 B1

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int Cl.[6]: **G01C 19/72**

(21) Anmeldenummer: **93102855.9**

(22) Anmeldetag: **24.02.1993**

(54) **Optischer Faserkreisel**

Fibre optic gyro

Gyroscope à fibre optique

(84) Benannte Vertragsstaaten:
**DE FR GB**

(30) Priorität: **27.03.1992 DE 4210057**

(43) Veröffentlichungstag der Anmeldung:
**29.09.1993 Patentblatt 1993/39**

(73) Patentinhaber: **TELDIX GmbH**
**D-69046 Heidelberg (DE)**

(72) Erfinder:
- **Hilpert, Klaus, Dipl.-Ing. (FH)**
  **W-6800 Mannheim 31 (DE)**
- **Künstler, Peter, Dipl.-Ing.**
  **W-6919 Bammental (DE)**

(74) Vertreter: **Wiechmann, Manfred, Dipl.-Ing.**
**Robert Bosch GmbH**
**Patentabteilung**
**Postfach 30 02 20**
**70442 Stuttgart (DE)**

(56) Entgegenhaltungen:
**EP-A- 0 424 663** **WO-A-91/17411**
**DE-A- 4 003 326**

- **TECHNISCHES MESSEN TM Bd. 53, Nr. 9, 1986, MUNCHEN DE Seiten 345 - 349 K.BöHM ET AL. 'Faseroptische Sensoren zur Messung von Drehraten'**
- **SOVIET JOURNAL OF QUANTUM ELECTRONICS. Bd. 13, Nr. 10, Oktober 1983, NEW YORK US Seiten 1403 - 1405; S.V. BESSONOVA ET AL. 'Fiber-optic ring interferometer with a multimode wyveguide'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft ein Verfahren und eine Anordnung zur Korrektur der Phasen derjenigen aus dem Ausgangssignal eines Faserringinterferometers selektierten Spektrallinien, die für die Ermittlung der Sagnacphase herangezogen werden, wobei die Spektrallinien Harmonische der Modulationsfrequenz sind, mit der das in die Faser des Interferometers eingespeiste Licht phasenmoduliert wird.

Wie die Sagnacphase mit drei oder vier aus dem Ausgangssignal eines Faserringinterferometers selektierten Spektrallinien hergeleitet werden kann, geht z.B. aus der DE 40 03 326 A1 und der EP 04 24 663 A1 hervor. Die Ableitung der Sagnacphase und schließlich der dazu proportionalen Drehrate des Faserringinterferometers erfolgt zweckmäßigerweise mit Hilfe von digital arbeitenden Schaltungsmitteln.

Um durch elektrische und/oder optische Störungen hervorgerufene Fehler bei der Ermittlung der Sagnacphase möglichst gering halten zu können, benötigt man die unverfälschten Phasenlagen (nachfolgend Sollphasen genannt) der einzelnen Spektrallinien, so daß darauf die real ermittelten, durch Störungen in ihrer Phase verdrehten Spektrallinien projeziert werden können.

Aufgrund von Temperatureinflüssen, denen das Faserringinterferometer ausgesetzt ist, sind die Sollphasen der Spektrallinien nicht zeitkonstant, sondern erfahren eine zeitabhängige Drift. Die Sagnacphase und die daraus abgeleitete Drehrate würden verfälscht, wenn nicht die Sollphasen, an denen sich die Projektion der real gemessenen Spektrallinien orientiert, den tatsächlich vorliegenden Sollphasen entspräche. Die zu einem Startzeitpunkt ermittelten Sollphasen müßten also während des Betriebes des Faserringinterferometers laufend korrigiert werden.

Der Erfindung liegt daher die Aufgabe zugrunde, ein Verfahren und eine Anordnung der eingangs genannten Art anzugeben, die mit geringem Aufwand eine Phasenkorrektur der Spektrallinien bewirken.

Erfindungsgemäß wird diese Aufgabe durch die Merkmale der Ansprüche 1 und 3 gelöst. Eine zweckmäßige Ausführung des Verfahrens nach Anspruch 1 ist dem Anspruch 3 zu entnehmen.

Anhand eines in der Zeichnung dargestellten Ausführungsbeispiels wird nachfolgend die Erfindung näher erläutert.

Fig. 1 zeigt ein Zeigerdiagramm von vier Spektrallinien und
Fig. 2 ein schematisches Blockschaltbild für die Herleitung der korrigierten Phasen der Spektrallinien.

In der einen ringförmigen Lichtweg bildenden Lichtleitfaser eines Faserringinterferometers breiten sich zwei gegenläufige Lichtwellen aus, die nach dem Austritt aus der Lichtleitfaser in einem Strahlteiler miteinander interferierten. Die Interferenz hängt von der Drehrate ab, mit der die mindestens eine Windung bildende Lichtleitfaser gedreht wird. Der Drehrate ist die Phasendifferenz zwischen den beiden Lichtwellen, welche die Lichtleitfaser in entgegengesetzte Richtungen durchlaufen haben, proportional.

Diese Phasendifferenz, sie wird als Sagnac-Phase bezeichnet, läßt sich, wie der EP 04 24 663 A1 und der DE 40 03 326 A1 zu entnehmen ist, aus den Amplituden der Spektrallinien des aus der Lichtleitfaser austretenden Interferenzlichts bestimmen.

Das optische Ausgangssignal der Lichtleitfaser eines Faserringinterferometers wird in bekannter Weise zur Weiterverarbeitung in ein elektrisches Signal umgewandelt. Dieses elektrische Ausgangssignal i(t) des optischen Faserringinterferometers ist, wie allgemein bekannt, gegeben durch:

$$i(t)=2I_o\cos^2 \cdot \{1/2[2\varphi+\psi_o \sin 2\pi f_m t - \psi_o \sin 2\pi f_m (t-\tau)]\} \qquad (1).$$

In dieser Beziehung gibt $I_o$ die Intensität des in die Lichtleitfaser eingespeisten Lichts, $\varphi$ die Sagnac-Phase, $\psi_o$ den Modulationsindex der mit der Frequenz $f_m$ durchgeführten sinusförmigen Phasenmodulation und $\tau$ die Laufzeit der Lichtwellen durch die Lichtleitfaser an.

Die zu ermittelnde Meßgröße, die Drehrate $\Omega$ des Faserringinterferometers, ist proportional zur Sagnac-Phase

$$\Omega = \frac{\lambda \cdot c}{8\,\pi\,N \cdot A}\,\varphi \qquad (2).$$

Hier ist $\lambda$ die Wellenlänge des in die Lichtleitfaser eingespeisten Lichts, c die Lichtgeschwindigkeit, A die von der Lichtleitfaser umschlossene Fläche und N die Anzahl der Lichtleitfaserwindungen.

Die Gleichung (2) zeigt also, daß die zu messende Drehrate $\Omega$ direkt von der Sagnac-Phase $\varphi$ abhängt. Es gilt also, die Sagnac-Phase $\varphi$ aus dem Ausgangssignal i(t) des Faserringinterferometers zu ermitteln.

Mit den Additionstherorem

$$\cos x/2 = \pm \sqrt{(1 + \cos x)/2},$$

$$\sin x - \sin y = 2 \cos [(x + y)/2] \sin [(x - y)/2]$$

und den Abkürzungen

$$\psi=\psi_o \sin \pi f_m \tau=\psi_o \sin \gamma, \text{ wobei } \gamma = \pi f_m \tau$$

folgt aus Gleichung (1)

$$i(t) = I_o \left\{1 + \cos[2 \varphi(t) + 2 \psi \cos (2\pi f_m t - \gamma)]\right\} \quad (3)$$

und daraus mit

$$\cos (x+y) = \cos x \cos y - \sin x \sin y$$

$$i(t)=I_o\left\{1+\cos[2\varphi(t)]\cos[2\psi\cos(2\pi f_m t-\gamma)]-\sin[2\varphi(t)]\sin[2\psi \cos[2\pi f_m-\gamma)]\right\} (4).$$

Mit Besselfunktionen der ersten Art läßt sich Gleichung (4) in eine für die Signalauswertung geeignete Form umschreiben.

$$i(t) = I_o \quad 1 + \cos 2\varphi$$

$$[J_0(2 \psi ) +\left\{2 \sum_{v=1}^{\infty} (-1)^v J_{2v} (2 \psi ) \cos 2_v (2\pi f_m t-\gamma)\right]$$

$$- \sin 2\varphi [2 \sum_{v=0}^{\infty} (-1)^v J_{2v+1} (2 \psi ) \cos (2v+1) (2\pi f_m t-\gamma)]\} \quad (5).$$

Dieses Ausgangssignal i(t) läßt sich in seine einzelnen Spektrallinien aufgegliedert folgendermaßen schreiben:

$$i(t) = I_o[1 + J_o (2 \psi ) \cos 2 \varphi ]+ \vec{A}_1+\vec{A}_2+\vec{A}_3+\vec{A}_4 \ldots \text{mit}$$
$$\vec{A}_1 = -2I_oJ_1(2 \psi )\sin 2\varphi\cos(2\pi f_m t-\gamma)$$
$$\vec{A}_2 = -2I_oJ_2(2 \psi )\cos 2\varphi \cos2(2\pi f_m t-\gamma) \quad (6)$$
$$\vec{A}_3 = +2I_oJ_3(2 \psi )\sin 2\varphi \cos3(2\pi f_m t-\gamma)$$
$$\vec{A}_4 = +2I_oJ_4(2 \psi )\cos 2\varphi \cos4(2\pi f_m t-\gamma)$$
...
...
...

Hierin sind die Faktoren $J_n(2\psi)$ mit n = 0,1,2,... die Werte der Besselfunktionen 1. Art der n-ten Ordnung für das Argument $2 \psi = 2 \psi_o \sin \pi f_m \tau$.

Voraussetzung für die Bestimmung der Drehrate $\Omega$ (t) aus dem Ausgangssignal i(t) in Gleichung (6) ist, daß die zeitliche Änderung von $\Omega$ (t) so langsam erfolgt, daß für die über die Fouriertransformation berechenbare Bandbreite $B_\varphi$ der Sagnac-Phase gilt:

$$B_\varphi < f_m.$$

In diesem Fall läßt sich von den in (6) aufgeführten Spektrallinien, deren Frequenzen ganzzahlige Harmonische der Modulationsfrequenz $f_m$ sind, jede beliebige Spektrallinie mit geeigneten Filtern separieren und daraus die Sagnac-Phase $_\varphi$(t) bzw. die Winkelgeschwindigkeit $\Omega$(t) bestimmen. Die an den Ausgängen solcher Filter abgreifbaren Amplituden der einzelnen in (6) angegebenen Spektrallinien sind dann:

$$\begin{aligned} A_1 &= -2I_0J_1(2\psi)\sin 2\varphi \\ A_2 &= -2I_0J_2(2\psi)\cos 2\varphi \\ A_3 &= +2I_0J_3(2\psi)\sin 2\varphi \\ A_4 &= +2I_0J_4(2\psi)\cos 2\varphi \\ &\ldots \\ &\ldots \end{aligned} \qquad (7)$$

Wie aus diesen Amplituden der Spektrallinien die Sagnacphase berechnet werden kann, soll hier nicht näher beschrieben werden. Hierzu sei auf die zuvorgenannten EP 0 424 663A und DE 40 03 326 A1 verwiesen.

Jede der in Gleichung (6) aufgeführten Spektrallinien ist eine komplexe Größe, die sich als Zeiger in einer komplexen Ebene darstellen läßt. Die Fig. 1 zeigt ein Zeigerdiagramm in der komplexen Ebene am Beispiel der ersten vier Spektrallinen $\vec{A}_1$, $\vec{A}_2$, $\vec{A}_3$ und $\vec{A}_4$, welche die zu einem Startzeitpunkt ermittelten Sollphasen $\alpha_1$, $\alpha_2$, $\alpha_3$ und $\alpha_4$ haben.

Zumindest die Sollphase $\alpha_1$ und $\alpha_3$ für die erste und dritte Spektrallinie $\vec{A}_1 \ldots \vec{A}_3$ werden zuvor aus einer Spektrallinie abgeleitet, deren Amplitude von cos 2 $\varphi$ abhängt, das könnte wie der Gleichung (7) zu entnehmen ist, die zweite oder die vierte Spektrallinie sein.

Wegen der Abhängigkeit vom cos 2 $\varphi$ sind die Amplituden dieser Spektrallinie $\vec{A}_2$, $\vec{A}_4$ gegenüber den von sin 2 $\varphi$ abhängigen Spektrallinien $\vec{A}_1$, $\vec{A}_3$ in dem interessierenden Drehratenbereich viel größer. Auf Spektrallinien $\vec{A}_2$, $\vec{A}_4$ mit großen Amplituden wirken sich Störungen weiniger gravierend aus, so daß deren Phasen von den ungestörten Sollphasen auch nur geringfügig abweichen. Deshalb kann durchaus die gemessene Phase $\alpha_2$ bzw. $\alpha_4$ der Spektrallinie $\vec{A}_2$ bzw. $\vec{A}_4$ als Sollphase angenommen und als Referenz für die Bestimmung der Sollphasen $\alpha_1$, $\alpha_3$ für die anderen Spektrallinien $\vec{A}_1$ und $\vec{A}_3$ herangezogen werden.

Aus der Gleichung (6) geht hervor, daß

$$\begin{aligned} \alpha_1 &= \frac{1}{2}(\alpha_2 + \pi) \\ \alpha_3 &= \frac{3}{2}(\alpha_2 + \pi) \\ \alpha_4 &= \frac{4}{2}(\alpha_2 + \pi) \end{aligned} \qquad (8)$$

ist, wenn z.B. die Phase $\alpha_2$ der zweiten Spektrallinie als Referenzphase genommen wird. So lassen sich also aus der gemessenen Sollphase $\alpha_2$ der zweiten Spektrallinie $\vec{A}_2$ die Sollphase der anderen für die Bestimmung der Sagnacphase heranszuziehenden Spektrallinien ableiten.

Die soeben aufgeführten Sollphasen $\alpha_1$, $\alpha_2$, $\alpha_3$, $\alpha_4$ seien zu einem Startzeitpunkt t = 0 bestimmt worden. Nun ändern sich aber, wie einleitend dargelegt, die Sollphasen im Lauf der Zeit. Die jeweils aktuellen korrigierten Sollphasen $\alpha_{1k}(t)$, $\alpha_{3k}(t)$, $\alpha_{4k}(t)$ ergeben sich aus den um einen Korrekturwert K1(t), K3(t), K4(t) ergänzten Sollphasen $\alpha_1$, $\alpha_3$, $\alpha_4$ zum Startzeitpunkt t = 0:

$$\begin{aligned} \alpha_{1k}(t) &= \alpha_1 + K1(t) \\ a_{3k}(t) &= \alpha_3 + K3(t) \\ \alpha_{4k}(t) &= \alpha_4 + K4(t) \end{aligned} \qquad (9)$$

Anhand des in Fig. 2 dargestellten Blockschaltbildes soll nun beschrieben werden, wie die Korrekturwerte K1(t), K3(t), K4(t) und schließlich die korrigierten Sollphasen $\alpha_{1k}(t)$, $\alpha_{3k}(t)$, $\alpha_{4k}(t)$ ermittelt werden.

Aus der zum Startzeitpunkt t = 0 selektierten zweiten Spektrallinie $\vec{A}_2$ wird die Sollphase $\alpha_2$ abgeleitet. Zu allen späteren Zeitpunkten bestimmt ein Phasendetektor PD aus der zweiten Spektrallinie $\vec{A}_2$ die jeweils aktuelle Sollphase, welche gleichzeitig die korrigierte Sollphase $\alpha_{2k}(t)$ ist.

Eine die Differenz zwischen der Sollphase $\alpha_2$ zum Startzeitpunkt t = 0 und der aktuellen Sollphase $\alpha_{2k}(t)$ bildende Schaltung S1 stellt drei Multiplizierern M1, M2 und M3 parallel die Phasenablage

$$dP2(t) = \alpha_2 - \alpha_{2k}(t) \qquad (10)$$

zur Verfügung. Die Multiplizierer M1, M2, M3 vervielfachen diese Phasenablage d P2(t) mit den Faktoren 0,5, 1,5 und 2,0, woraus die Korrekturwerte

$$K1(t) = dP2(t) \cdot 0,5$$

$$K3(t) = dP2(t) \cdot 1,5$$

$$K4(t) = dP(t) \cdot 2,0 \quad (11)$$

hervorgehen.

Summierer S2, S3, S4 addieren gemäß Gleichung (9) zu den einzelnen zum Startzeitpunkt (t = 0) ermittelten Sollphasen $\alpha_1$, $\alpha_3$, $\alpha_4$ die entsprechenden Korrekturwerte K1(t), K3(t), K4(t) nach Gleichung (11), so daß man schließlich an den Ausgängen der Summierer S2, S3, S4 die korrigierten Sollphasen

$$\alpha_{1k}(t) = \alpha_1 + 0,5 \cdot dP2(t)$$

$$\alpha_{3k}(t) = \alpha_3 + 1,5 \cdot dP2(t)$$

$$\alpha_{4k}(t) = \alpha_4 + 2,0 \cdot dP2(t) \quad (12)$$

erhält.

Alle die in Fig. 2 aufgeführten Schaltungsmittel können an sich bekannte analoge Schaltungen sein. Zweckmäßigerweise werden aber die einzelnen Schaltungsfunktionen von digitalen Signalprogrammen angeführt.

## Patentansprüche

1. Verfahren zur Korrektur der Phasen ($\alpha_1$, $\alpha_2$, $\alpha_3$, $\alpha_4$) derjenigen aus dem Ausgangssignal eines Faserringinterferometers selektierten Spektrallinien ( $\vec{A}_1$, $\vec{A}_2$, $\vec{A}_3$, $\vec{A}_4$), die für die Ermittlung der Sagnacphase ($\varphi$) herangezogen werden, wobei die Spektrallinien Harmonische der Modulationsfrequenz sind, mit der das in die Faser des Interferometers eingespeiste Licht phasenmoduliert wird, dadurch gekennzecihnet, daß die Phasen ($\alpha_1$, $\alpha_2$, $\alpha_3$, $\alpha_4$) aller selektierten Spektrallinien ($\vec{A}_1$, $\vec{A}_2$, $\vec{A}_3$, $\vec{A}_4$) zu einem Startzeitpunkt ermittelt werden, daß die Phase ($\alpha_2$) einer vom Kosinus der Sagnacphase abhängigen Spektrallinie ($\vec{A}_2$) in gewissen Zeitabständen nach dem Startzeitpunkt erneut ermittelt und jeweils die Ablage zwischen der aktuell ermittelten Phase ($\alpha_{2K}$) dieser Spektrallinie ($\vec{A}_2$) und ihrer zum Startzeitpunkt ermittelten Phase ($\alpha_2$) bestimmt wird und daß zu den zum Startzeitpunkt ermittelten Phasen ($\alpha_1$, $\alpha_3$, $\alpha_4$) der anderen Spektrallinien ($\vec{A}_1$, $\vec{A}_3$, $\vec{A}_4$) ein Korrekturwert addiert wird, welcher der zuvor ermittelten Phasenablage proportional ist.

2. Verfahren nach Anspruch 1, dadurch gekennzeichnet, daß die Phasenablage anhand der 2. harmonischen Spektrallinie ($\vec{A}_2$) ermittelt wird und daß als Korrekturwert für die n-te (n = 1,2,...) harmonische Spektrallinie das n/2 fache der Phasenablage verwendet wird.

3. Anordnung zur Korrektur der Phasen ($\alpha_1$, $\alpha_2$, $\alpha_3$, $\alpha_4$) derjenigen aus dem Ausgangssignal eines Faserringinterferometers selektierten Spektrallinien ($\vec{A}_1$, $\vec{A}_2$, $\vec{A}_3$, $\vec{A}_4$), die für die Ermittlung der Sagnacphase ($\varphi$) herangezogen werden, wobei die Spektrallinien Harmonische der Modulationsfrequenz sind, mit der das in die Faser des Interferometers eingespeiste Licht phasenmoduliert wird, dadurch gekennzeichnet, daß erste Mittel (PD) vorhanden sind, welche in gewissen Zeitabständen die aktuelle Phase $(\alpha)_{2k}$) einer vom Kosinus der Sagnacphase abhängigen Spektrallinie ($\vec{A}_2$) messen, daß zweite Mittel (S1) die Ablage zwischen der aktuellen Phase ($\alpha_{2k}$) und der zu einem Startzeitpunkt gemessenen Phase ($\alpha_2$) bestimmen, daß dritte Mittel (S2, S3, S4) vorhanden sind, welche zu der, ebenfalls zum Startzeitpunkt ermittelten Phase (($\alpha_1$, $\alpha_3$, $\alpha_4$) einer jeden anderen selektierten Spektrallinie ($\vec{A}_1$, $\vec{A}_3$, $\vec{A}_4$) einen Korrekturwert addieren, welcher der von den zweiten Mitteln (S1) bestimmten Phasenablage proportional ist.

## Claims

1. Method for correcting the phases ($\alpha_1$, $\alpha_2$, $\alpha_3$, $\alpha_4$) of those spectral lines ( $\vec{A}_1$, $\vec{A}_2$, $\vec{A}_3$, $\vec{A}_4$), selected from the output signal of a fibre ring interferometer, which are used to determine the Sagnac phase ($\phi$), the spectral lines being harmonics of the modulation frequency with which the light fed into the fibre of the interferometer is phase-modulated, characterized in that the phases ($\alpha_1$, $\alpha_2$, $\alpha_3$, $\alpha_4$) of all the selected spectral lines ($\vec{A}_1$, $\vec{A}_2$, $\vec{A}_3$, $\vec{A}_4$) are determined at a starting instant, in that the phase ($\alpha_2$) of a spectral line ($\vec{A}_2$) which is dependent on the cosine of

the Sagnac phase is redetermined at certain time intervals after the starting instant and in each case the deviation between the currently determined phase ($\alpha_{2k}$) of this spectral line ($\vec{A}_2$) and its phase ($\alpha_2$) determined at the starting instant is determined, and in that a correction value which is proportional to the previously determined phase deviation is added to the phases ($\alpha_1$, $\alpha_3$, $\alpha_4$), determined at the starting instant, of the other spectral lines ( $\vec{A}_1$, $\vec{A}_3$, $\vec{A}_4$).

**2.** Method according to Claim 1, characterized in that the phase deviation is determined with the aid of the second harmonics spectral line ($\vec{A}_2$), and in that the n/2 multiple of the phase deviation is used as correction value for the nth (n = 1,2,...) harmonic spectral line.

**3.** Arrangement for correcting the phases ($\alpha_1$, $\alpha_2$, $\alpha_3$, $\alpha_4$) of those spectral lines ($\vec{A}_1$, $\vec{A}_2$, $\vec{A}_3$, $\vec{A}_4$), selected from the output signal of a fibre ring interferometer, which are used to determine the Sagnac phase ($\phi$), the spectral lines being harmonics of the modulation frequency with which the light fed into the fibre of the interferometer is phase-modulated, characterized in that first means (PD) are present which at certain time intervals measure the current phase ($\alpha_{2k}$) of a spectral line ($\vec{A}_2$) dependent on the cosine of the Sagnac phase, in that second means (S1) determine the deviation between the current phase ($\alpha_{2k}$) and the phase ($\alpha_2$) measured at a starting instant, and in that third means (S2, S3, S4) are present which add a correction value which is proportional to the phase deviation determined by the second means (S1) to the phase ($\alpha_1$, $\alpha_3$, $\alpha_4$), likewise determined at the starting instant, of each other selected spectral line ($\vec{A}_1$, $\vec{A}_3$, $\vec{A}_4$).

## Revendications

**1.** Procédé pour la correction des phases ($\alpha_1$, $\alpha_2$, $\alpha_3$, $\alpha_4$) des raies spectrales ($\vec{A}_1$, $\vec{A}_2$, $\vec{A}_3$, $\vec{A}_4$) sélectionnées à partir du signal de sortie d'un interféromètre à fibre annulaire, auxquelles on a recours pour la détermination de la phase Sagnac ($\varphi$), les raies spectrales étant des harmoniques de la fréquence de modulation avec laquelle est modulée en phase la lumière injectée dans la fibre de l'interféromètre, procédé caractérisé en ce que les phases ($\alpha_1$, $\alpha_2$, $\alpha_3$, $\alpha_4$) de toutes les raies spectrales sélectionnées ( $\vec{A}_1$, $\vec{A}_2$, $\vec{A}_3$, $\vec{A}_4$) sont déterminées à un instant de démarrage, en ce que la phase ($\alpha_2$) d'une raie spectrale ($\vec{A}_2$) dépendante du cosinus de la phase Sagnac est à nouveau déterminée à certains intervalles de temps après l'instant de démarrage et respectivement la différence entre la phase ($\alpha_{2k}$) actuellement déterminée de cette raie spectrale ($\vec{A}_2$) et sa phase ($\alpha_2$) déterminée à l'instant de démarrage est déterminée, et en ce qu'aux phases ($\alpha_1$, $\alpha_3$, $\alpha_4$), déterminées à l'instant de démarrage, des autres raies spectrales sélectionnées ( $\vec{A}_1$, $\vec{A}_3$, $\vec{A}_4$) est ajoutée une valeur de correction qui est proportionnelle à la différence de phase précédemment déterminée.

**2.** Procédé selon la revendication 1, caractérisé en ce que la différence de phase est déterminée à l'aide de la deuxième raie spectrale harmonique ($\vec{A}_2$) et en ce que, comme valeur de correction pour la nième (n = 1,2,...) raie spectrale harmonique, on utilise n/2 fois la différence de phase.

**3.** Disposition pour la correction des phases ($\alpha_1$, $\alpha_2$, $\alpha_3$, $\alpha_4$) des raies spectrales ($\vec{A}_1$, $\vec{A}_2$, $\vec{A}_3$, $\vec{A}_4$) sélectionnées à partir du signal de sortie d'un interféromètre, auxquelles on a recours pour la détermination de la phase Sagnac ($\varphi$), les raies spectrales étant des harmoniques de la fréquence de modulation avec laquelle la lumière injectée dans la fibre de l'électromètre est modulée en phase, procédé caractérisé en ce qu'il est prévu des premiers moyens (PD), qui mesurent à des intervalles de temps déterminés la phase actuelle ($\alpha_{2k}$) d'une raie spectrale ($\vec{A}_2$) dépendante du cosinus de la phase Sagnac, en ce que de seconds moyens (S1) déterminent la différence entre la phase actuelle ($\alpha_{2k}$) et la phase ($\alpha_2$) mesurée à un instant de démarrage, en ce qu'il est prévu des troisièmes moyens (S2, S3, S4) qui ajoutent à la phase ($\alpha_1$, $\alpha_3$, $\alpha_4$), également déterminée à l'instant de démarrage, de chacune d'autres raies spectrales sélectionnées ( $\vec{A}_1$, $\vec{A}_3$, $\vec{A}_4$) une valeur de correction qui est proportionnelle aux différences de phases déterminées par les seconds moyens (S1).

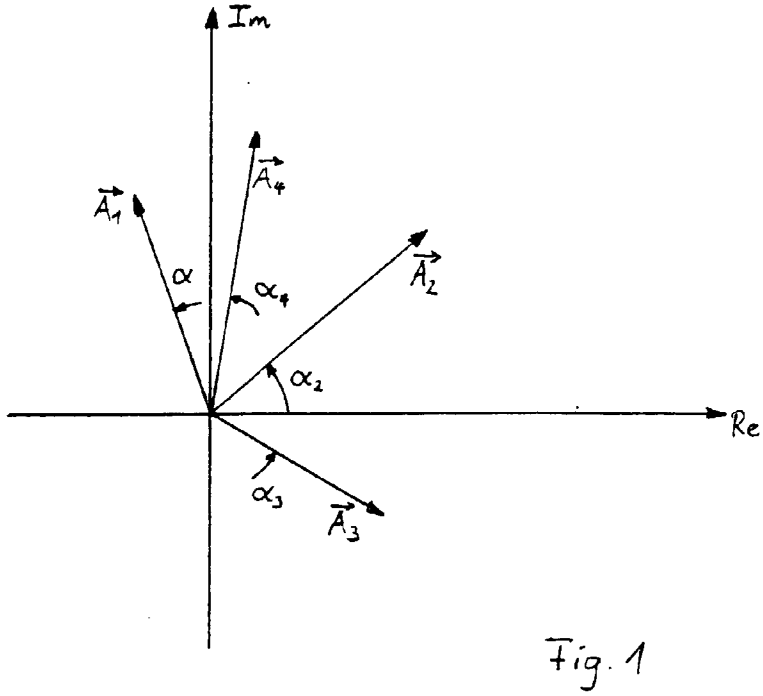
Im
Re
α
α4
α2
α3


Fig. 1

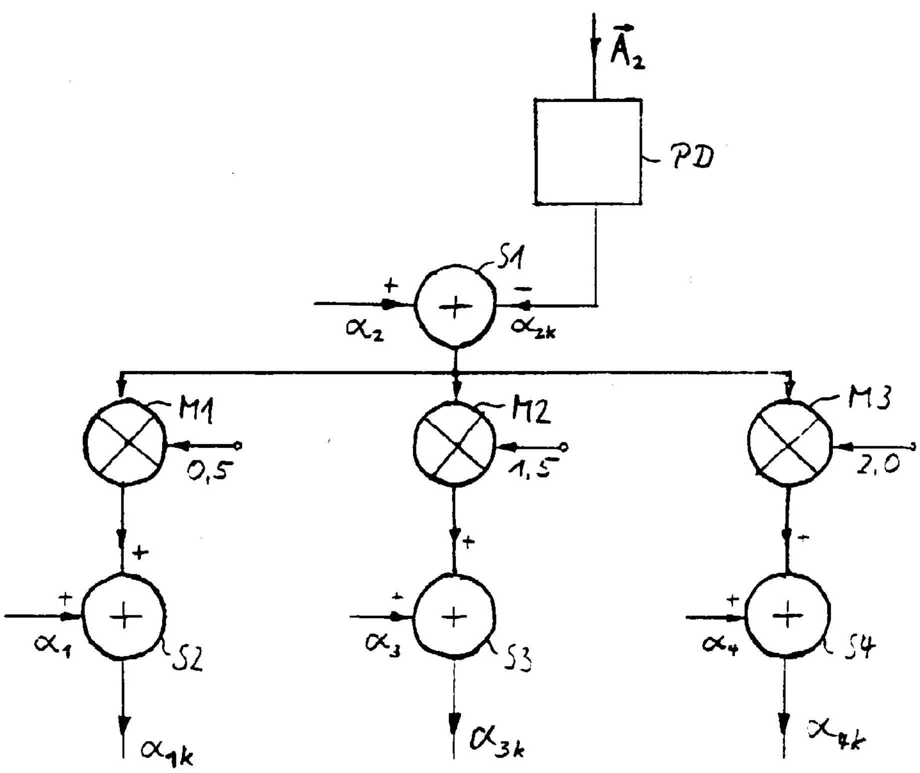
PD
S1
M1
M2
M3
0,5
1,5
2,0
S2
S3
S4
α2
α2k
α1
α3
α4
α1k
α3k
α4k


Fig. 2